# EUROPÄISCHE PATENTSCHRIFT

(11) **EP 4 461 171 B1**
(45) Veröffentlichungstag und Bekanntmachung des Hinweises auf die Patenterteilung: **17.12.2025**
(21) Anmeldenummer: 24174886.2
(22) Anmeldetag: 08.05.2024
(51) Int. Cl.: A47J 36/20, A47J 43/07, A47J 27/04

(54) **GAR-BAUGRUPPE FÜR EINE KÜCHENMASCHINE**
COOKING ASSEMBLY FOR A KITCHEN APPLIANCE
ENSEMBLE DE CUISSON POUR UN ROBOT DE CUISINE

(30) Priorität: 09.05.2023 DE 102023112086
(43) Veröffentlichungstag der Anmeldung: 13.11.2024
(73) Patentinhaber: Wundermix GmbH, 85748 Garching b. München (DE)
(72) Erfinder: Strohbach, Daniel, 81739 München (DE)
(74) Vertreter: Patentanwälte Bauer Vorberg Kayser

(56) Entgegenhaltungen:
- WO-A1-2007/009195
- DE-U1- 202023 100 828

## Beschreibung

Die vorliegende Erfindung betrifft eine Gar-Baugruppe für eine Küchenmaschine. Küchenmaschinen werden in der Regel zur Bearbeitung und Verarbeitung von Lebensmitteln und zur Zubereitung von Speisen eingesetzt. Es existieren Multifunktionsküchenmaschinen, wie beispielsweise jene vom Unternehmen "Vorwerk" vertriebene Thermomix^{®} Küchenmaschine in den Modellen TM5 und TM6. Eine solche Küchenmaschine umfasst einen aufheizbaren Topf. Der Topf weist eine Topföffnung auf. Die Topföffnung ist mit einem Topfdeckel abdeckbar (verschließbar), wobei der Topfdeckel eine Zuführöffnung aufweist, die einen geringeren Durchmesser als die Topföffnung hat. Die Zuführöffnung ist mittig im Topfdeckel angeordnet. In dem Topf kann im Bereich eines Topfbodens ein Misch- und Zerkleinerungswerkzeug rotierbar angeordnet sein, insbesondere ein Mixmesser. Beim Betrieb der Küchenmaschine ist die Topföffnung des Topfes mit dem Topfdeckel abgedeckt. Durch die in dem Topfdeckel ausgebildete Zuführöffnung können Zutaten in den Zubereitungstopf eingeführt werden. Der Topf ist in eine Topfaufnahme einer Küchenmaschinen-Basiseinheit eingesetzt. Der Topf ist wie erwähnt aufheizbar (z. B. durch ein integriertes Heizelement oder durch Aufheizen von außen), sodass im Topf befindliche Speisen oder Lebensmittel aufgeheizt oder gegart werden können. Beim Aufheizen oder Garen von Lebensmitteln (z. B. auch Wasser) kann Dampf (Wasserdampf) aufsteigen und durch die Zuführöffnung nach topfaußen entweichen.

Bei Verwendung mit einer Thermomix^{®} Küchenmaschine kann ein Gargefäß unmittelbar auf den Topfdeckel aufgesetzt werden, mit welchem der Topf der Küchenmaschine abgedeckt wird. Entsprechende Gargefäße werden unter der Bezeichnung "Varoma" vertrieben. Da der Topf aufheizbar ist kann- sofern in dem Topf Lebensmittel oder Wasser befindlich sind - beim Aufheizen Dampf (Wasserdampf) entstehen, aufsteigen und durch die Zuführöffnung des Topfdeckels und im Gargefäß-Boden ausgebildete Öffnungen in das Gargefäß aufsteigen. Durch den (heißen) Dampf können in dem Gargefäß befindliche Lebensmittel gegart werden.

Die DE 10 2014 112 959 A1 offenbart ein Gargefäß zum Aufsetzen auf einen Topf einer Küchenmaschine, wobei das Gargefäß eine oder mehrere Bodenöffnungen aufweist, durch welche aus dem Topf austretender Wasserdampf in den Garaufsatz eintreten und Kondensat aus dem Gargefäß in den Topf fließen kann.

Aus der DE 20 2023 100 828 U1 ist ein Set stapelbarer Gargefäße zum Einsetzen in einen Dampfgarbehälter bekannt. Aus der WO 2007/009195 A1 sind stapelbare Dampfgarbehälter bekannt.

Die vorliegende Erfindung betrifft wie erwähnt eine Gar-Baugruppe für eine Küchenmaschine. Die Küchenmaschine weist einen Topf mit einer Topföffnung auf. Die Topföffnung kann mit einem Topfdeckel abdeckbar bzw. verschließbar sein. In dem Topfdeckel ist eine Zuführöffnung angeordnet. Der Topf ist beheizbar, sodass in dem Topf befindliches Wasser zum Verdampfen erhitzt werden kann. Der Wasserdampf kann im Topf aufsteigen und durch die Topföffnung oder sofern die Topföffnung mit dem Topfdeckel abgedeckt ist über die Zuführöffnung im Topfdeckel nach topfaußen entweichen. Sofern ein Gargefäß auf dem Topf platziert ist, tritt der aufsteigende Wasserdampf in das Gargefäß ein. In dem Gargefäß kondensierendes Wasser kann durch die Zuführöffnung in den Topf zurückfließen.

Wasserdampf kann als Wärmeträgermedium verstanden werden, da dieser erst durch Verdampfen von Wasser bei 100 °C entsteht und daher eine hohe Temperatur aufweist (also Wärme "trägt"). Auch andere Dämpfe oder Gase anderer Stoffe können als Wärmeträgermedium fungieren.

Der vorliegenden Erfindung liegt die Aufgabe zugrunde eine Gar-Baugruppe für eine Küchenmaschine bereitzustellen, mit welcher zeitgleich mehrere Speisen gegart werden können.

Gelöst wird diese Aufgabe mit einer Gar-Baugruppe gemäß Anspruch 1.

Ferner liegt der Erfindung die Aufgabe zugrunde eine Küchenmaschine bereitzustellen, die ein zeitgleiches Garen mehrerer Speisen ermöglicht.

Dies wird mit einer Küchenmaschine gemäß Anspruch 13 gelöst.

Zunächst betrifft die Erfindung eine Gar-Baugruppe für eine einen Topf aufweisende Küchenmaschine, aufweisend mehrere übereinander anordenbare oder angeordnete Gareinheiten, wobei die Gar-Baugruppe derart
a) auf den Topf aufsetzbar ist, oder
b) in den Topf oder ein auf dem Topf angeordnetes Gefäß einsetzbar ist,

dass ein aus dem Topf aufsteigendes Wärmeträgermedium, insbesondere Wasserdampf, Wärmeenergie an die Gareinheiten überträgt, sodass in den Gareinheiten aufgenommene Speisen gegart werden können,
wobei die Gareinheiten jeweils einen Speisenaufnahmeabschnitt zur Aufnahme der Speise und einen außerhalb des Speisenaufnahmeabschnitts angeordneten Strömungsabschnitt aufweisen, wobei die jeweiligen Strömungsabschnitte der Gareinheiten - bei Anordnung der Gareinheiten übereinander - gemeinsam einen, insbesondere vertikalen, Strömungsweg für aufsteigendes Wärmeträgermedium ausbilden.

Erfindungsgemäß zeichnet sich die Gar-Baugruppe dadurch aus, dass die Gar-Baugruppe ferner ein Gehäuse aufweist, in welches die Gareinheiten derart einsetzbar oder eingesetzt sind, dass die Gareinheiten übereinander angeordnet sind, und dass das Gehäuse Fächer aufweist, in welche die Gareinheiten einsetzbar oder eingesetzt sind.

Die Gar-Baugruppe kann grundsätzlich entweder unmittelbar auf den Topf aufgesetzt werden, z. B. auf einen die Topföffnung des Topfes begrenzenden oberen Topfrand. In diesem Fall kann aufsteigendes Wärmeträgermedium unmittelbar durch die Topföffnung in die Gar-Baugruppe strömen. Auch kann ein "Aufsetzen auf den Topf" meinen, dass die Gar-Baugruppe unmittelbar auf einen eine Zuführöffnung aufweisenden Topfdeckel des Topfes aufgesetzt wird. In diesem Fall kann aufsteigendes Wärmeträgermedium durch die Zuführöffnung in die Gar-Baugruppe strömen. Ferner kann vorgesehen sein, dass die Gar-Baugruppe unmittelbar in den Topf eingesetzt wird. Dabei kann sich die Gar-Baugruppe an in dem Topf befindlichen Formelementen (z. B. sich vertikal erstreckende Rippen) abstützen. Auch kann die Gar-Baugruppe auf dem Topfboden des Topfes aufstehen. Auch eine Abstützung oder ein Aufsetzen auf dem Mixmesser ist möglich. Ferner kann der Außendurchmesser der Gar-Baugruppe dahingehend an den Innendurchmesser des Topfes angepasst sein, dass sich allein dadurch ein fester Sitz der Gar-Baugruppe in dem Topf ergibt. Ferner kann vorgesehen sein, dass im Falle eines auf dem Topf bzw. Topfdeckel angeordneten Gargefäßes die Gar-Baugruppe in das Gargefäß einsetzbar ist bzw. eingesetzt ist. In diesem Falle steigt ein Wärmeträgermedium aus dem Topf auf, tritt durch die Zuführöffnung des Topfdeckels hindurch in das Gargefäß und sodann in die Gar-Baugruppe ein.

Kern der Erfindung ist die Möglichkeit mehrere Speisen (z. B. für mehrere Personen) gleichzeitig zubereiten zu können. Gastgebern entsteht häufig das Problem mehrere Gäste nicht gleichzeitig mit einer Speise bewirten zu können. Bekannte Zubereitungsgerätschaften für Pfannkuchen, Crepes, Waffeln, Eier etc. erlauben häufig nur die Zubereitung einer einzelnen Speise. Dies bedeutet, dass Gäste nicht gleichzeitig ihre Speisen verzehren können. Die vorliegende Erfindung hingegen erlaubt das zeitgleiche Garen mehrerer Speisen. Dies wird durch die Mehrzahl von Gareinheiten ermöglicht. Das aufsteigende Wärmeträgermedium, z. B. heißer Wasserdampf, kann dazu verwendet werden, um in den Gareinheiten bzw. den Speisenaufnahmeabschnitten befindliche Lebensmittel (z. B. eine Teigmasse oder Teigflüssigkeit, Eier etc.) zu erhitzen, also zu garen. Unter "Garen" kann in diesem Kontext allgemein ein Aufwärmen oder Erhitzen von Lebensmitteln verstanden werden. Auch kann unter "Garen" ein konkreter Garvorgang wie Dünsten oder Dampfgaren verstanden werden. Die vorliegende Erfindung eignet sich insbesondere zum gleichzeitigen Garen von Teig- bzw. Eierspeisen.

Eine Gareinheit kann auch als Gar-Boden bezeichnet werden. Die Gar-Baugruppe umfasst mehrere übereinander angeordnete Gar-Böden. Eine Anordnung von Gareinheiten bzw. Gar-Böden "übereinander" meint, dass in einer Vertikalrichtung mehrere Gareinheiten bzw. Gar-Böden aufeinanderfolgend angeordnet sein können.

Die Gareinheit kann einteilig oder mehrteilig ausgebildet sein. Bei einer mehrteiligen Ausgestaltung der Gareinheit kann diese einen Ring sowie einen Einsatz umfassen. Der Einsatz kann dazu ausgebildet sein, in den Ring eingesetzt zu werden. Dazu kann der Ring eine Ring-Auflage aufweisen, auf welche der Einsatz auflegbar ist.

Der Ring kann insbesondere rohrartig ausgebildet sein, wobei die Höhe des rohrartigen Rings geringer als der Durchmesser ausgebildet sein kann. Der Ring kann eine Ring-Innenseite sowie eine Ring-Außenseite aufweisen. Die Ring-Innenseite kann vorzugsweise eine dem Einsatz zugewandte Seite des Rings sein, sofern der Einsatz in einem in den Ring eingesetzten Zustand ist. Die Ring-Außenseite kann insbesondere eine der Ring-Innenseite gegenüberliegend angeordnete Seite des Rings sein.

Die Ring-Auflage kann insbesondere an der Ring-Innenseite angeordnet sein. Zudem kann die Ring-Auflage vorzugsweise umlaufend oder in mehrere Ring-Auflage-Abschnitte aufgeteilt an der Ring-Innenseite angeordnet sein. Der Ring kann ferner auf den Topfdeckel aufsetzbar ausgebildet sein.

Der Einsatz kann den Speisenaufnahmeabschnitt sowie den Strömungsabschnitt aufweisen. Der Einsatz kann eine Einsatz-Auflage zur Auflage auf der Ring-Auflage aufweisen. Die Einsatz-Auflage kann insbesondere an einem äußeren Rand des Einsatzes angeordnet sein. Vorzugsweise kann die Einsatz-Auflage an einer Unterseite des Einsatzes angeordnet sein. Die Unterseite des Einsatzes kann insbesondere eine dem Topf zugewandte Seite der Gareinheit sein, sofern diese in einem auf den Topf aufgesetzten Zustand ist.Der Ring kann ferner eine Rastnase aufweisen. Die Rastnase kann insbesondere an der Ring-Innenseite angeordnet sein. Die Rastnase kann derart ausgebildet sein, den Einsatz, sofern dieser in den Ring eingesetzt ist, zu arretieren bzw. zurückzuhalten. Der Einsatz kann dabei insbesondere gegenüber einem ungewollten Herausfallen beim Handhaben der Gareinheit arretiert bzw. zurückgehalten werden. Die Rastnase kann insbesondere von der Ring-Auflage beabstandet angeordnet sein. Vorzugsweise kann die Rastnase derart von der Ring-Auflage beabstandet angeordnet sein, dass, bei in den Ring eingesetztem Einsatz, dieser zwischen der Ring-Auflage und der Rastnase anordenbar ist.

Ferner kann der Ring einen Griff aufweisen. Der Griff kann an der Ring-Außenseite angeordnet sein. Ferner kann der Griff derart ausgebildet sein, dass sich dieser von der Ring-Außenseite weg erstreckt. Vorzugsweise kann der Griff an einem oberen Ringende oder einem unteren Ringende des Rings angeordnet sein. Das untere Ringende kann insbesondere durch die Ring-Innenseite und/oder Ring-Außenseite an einem, sofern die Gareinheit auf den Topf aufgesetzt ist, dem Topf zugewandten Ende gebildet sein. Das obere Ringende kann insbesondere an einer dem unteren Ringende gegenüberliegenden Seite des Rings angeordnet sein.

Der Griff kann vorzugsweise laschenartig ausgebildet sein. Außerdem kann vorgesehen sein, dass der Ring mehrere Griffe aufweist. Vorzugsweise können zwei Griffe vorgesehen sein, wobei die zwei Griffe diametral zueinander an dem Ring angeordnet sein können.

Ein Speisenaufnahmeabschnitt kann eine Garfläche aufweisen. Eine Garfläche ist dabei eine Fläche auf die eine Speise (z. B. eine Teigmasse oder eine Eiermasse) aufgebracht und darauf gegart wird. Eine Garfläche kann plan oder gekrümmt sein (z. B. nach Art eines Pfannenbodens). Vorzugsweise sind die Gareinheiten aus Kunststoff gefertigt.

Die Garfläche kann geschlossen oder perforiert ausgebildet sein. Das kann bedeuten, dass die Garfläche eine oder mehrere Perforations-Öffnungen aufweist. Bei einer perforierten Garfläche kann das Wärmeträgermedium durch die Garfläche, insbesondere die Perforations-Öffnungen, hindurchströmen. Dadurch kann eine auf der Garfläche positionierte Speise besser bzw. gleichmäßiger von dem Wärmeträgermedium angeströmt und somit gegart werden.

Ist die Garfläche dagegen geschlossen, kann das Wärmeträgermedium nicht durch die Garfläche hindurchströmen. Vorteilhaft bei einer geschlossenen Garfläche ist, dass ausgeschlossen werden kann, dass insbesondere flüssige bzw. flüssigere Speisen durch die Garfläche hindurchfließen.

Die Strömungsabschnitte der Gareinheiten ermöglichen eine Strömung bzw. Hindurchtreten von Wärmeträgermedium. Unter einem Strömungsweg kann beispielsweise ein Strömungskanal oder ein Strömungsraum verstanden werden. Ein Strömungsweg kann auch einen Aufbau meinen, der eine Vorzugsströmungsrichtung bzw. einen Vorzugsströmungsweg vorgibt. Weitere Ausgestaltungen der Erfindung sind in den Unteransprüchen sowie der nachfolgenden Beschreibung angegeben.

Nach einer ersten Ausgestaltung der Erfindung kann vorgesehen sein, dass bei Anordnung der Gareinheiten übereinander der Strömungsweg mit zwischen den Gareinheiten vorliegenden Zwischenräumen strömungstechnisch verbunden ist. Der Strömungsweg kann also in die Zwischenräume münden.

Nach einer weiteren Ausgestaltung der Erfindung kann vorgesehen sein, dass der Speisenaufnahmeabschnitt von einem Begrenzungssteg umgeben ist, der ein Herauslaufen der Speise aus dem Speisenaufnahmeabschnitt beim Garen verhindert. Der Speisenaufnahmeabschnitt kann beispielsweise eine kreisförmige (scheibenförmige), ovale oder polygonale Kontur aufweisen. Der Begrenzungssteg kann ein Begrenzungsrand sein, der ausgehend von der Garfläche nach oben wegragt. Der Begrenzungsrand läuft vorzugsweise kontinuierlich um den Speisenaufnahmeabschnitt bzw. die Garfläche herum.

Nach einer weiteren Ausgestaltung der Erfindung kann vorgesehen sein, dass die Gareinheiten übereinander stapelbar ausgebildet sind. Dies meint, dass die Gareinheiten in einfacher Weise aufeinander aufsetzbar sind. Eine jeweilige Gareinheit kann somit auf einer darunterliegenden Gareinheit platziert werden. Es können Befestigungsmittel vorgesehen sein, die eine Befestigung einer jeweiligen Gareinheit mit einer benachbarten (darunterliegenden) Gareinheit ermöglichen, z. B. durch Formschluss. Eine stapelbare Ausbildung ermöglicht eine besonders einfache Anordnung der Gareinheiten.

Nach einer weiteren Ausgestaltung der Erfindung kann vorgesehen sein, dass die Gareinheiten jeweils zwischen Begrenzungssteg und einer Gareinheit-Außenwand eine umlaufende Ringnut aufweisen, wobei in einem Ringnutboden eine oder mehrere Durchtrittsöffnungen für das Wärmeträgermedium ausgebildet sind. Eine solche Ringnut erleichtert das Ablaufen von kondensiertem Wärmeträgermedium und verhindert die Vermischung von kondensiertem Wärmeträgermedium mit der zu garenden Speise.

Die Gareinheit-Außenwand kann bei einer mehrteiligen Ausgestaltung der Gareinheit von der Ring-Innenseite oder der Ring-Außenseite ausgebildet werden. Die mehreren Durchtrittsöffnungen können umlaufend segmentiert ausgebildet sein. Die jeweiligen Durchtrittsöffnungen können dabei stets gleich groß oder unterschiedlich groß ausgebildet sein. Ferner können die Durchtrittsöffnungen gleichmäßig oder ungleichmäßig über die umlaufende Ringnut verteilt angeordnet sein.

Nach einer weiteren Ausgestaltung der Erfindung kann vorgesehen sein, dass die Gareinheiten jeweils auf ihrer Unterseite einen Standfuß aufweisen, vorzugsweise in Form eines nach unten ragenden, insbesondere umlaufenden, Kragens, mit dem eine jeweilige Gareinheit auf einer darunterliegenden Gareinheit platzierbar ist. Der Standfuß kann ein ringförmig ausgebildeter Standfuß sein. Mit dem Standfuß kann eine Gareinheit auf einer unter dieser Gareinheit angeordneten (darunterliegenden) Gareinheit platziert werden, nämlich indem der Standfuß in die Ringnut der darunterliegenden Gareinheit eingesetzt wird. Eine unterste Gareinheit des Stapels von Gareinheiten kann mit ihrem Standfuß auf dem Topfdeckel des Topfes platziert werden. Gleiches gilt für eine Platzierung auf einem Topfrand.

Nach einer weiteren Ausgestaltung der Erfindung kann vorgesehen sein, dass im Falle von mehreren übereinandergestapelten Gareinheiten
- bei Aufsetzen der Gar-Baugruppe auf den Topf, eine unterste Gareinheit mit dem Standfuß auf dem Topf, insbesondere auf einem eine Topföffnung des Topfes abdeckenden Topfdeckel, platziert ist,
- bei Einsetzen der Gar-Baugruppe in den Topf, eine unterste Gareinheit mit dem Standfuß auf einer Topffläche, insbesondere einer Topfbodenfläche, platziert ist,
- bei Einsetzen der Gar-Baugruppe in ein auf dem Topf angeordnetes Gefäß, eine unterste Gareinheit mit dem Standfuß auf einer Gefäßfläche, insbesondere einer Gefäßbodenfläche, platziert ist.

Nach einer weiteren Ausgestaltung der Erfindung kann vorgesehen sein, dass im Falle von mehreren übereinandergestapelten Gareinheiten, die jeweiligen Standfüße der Gareinheiten den Strömungsweg nach außen abgrenzen.

Nach einer weiteren Ausgestaltung der Erfindung kann vorgesehen sein, dass im Falle von mehreren übereinandergestapelten Gareinheiten zwischen dem Begrenzungssteg und dem Standfuß die eine oder die mehreren Durchtrittsöffnungen in einer jeweiligen Gareinheit ausgebildet ist/sind, durch welche Wärmeträgermedium hindurchtreten kann.

Erfindungsgemäß ist vorgesehen, dass die Gar-Baugruppe ferner ein Gehäuse aufweist, in welches die Gareinheiten derart einsetzbar oder eingesetzt sind, dass die Gareinheiten übereinander angeordnet sind. Ein solches Gehäuse ermöglicht eine besonders sichere Handhabung der Gar-Baugruppe, da damit die Gareinheiten vorab (d.h. vor dem Einsetzen in den Topf oder ein auf dem Topf angeordnetes Gargefäß) in dem Gehäuse positioniert werden. Dies verhindert beim Entnehmen der Gar-Baugruppe aus dem Topf bzw. Gargefäß, dass sich ein Nutzer am heißen Wasserdampf verbrüht. Auch verringert die Platzierung der Gar-Baugruppe im Topf bzw. Gargefäß mittels eines solchen Gehäuses den Aufwand bei der Platzierung.

Erfindungsgemäß ist vorgesehen, dass das Gehäuse Fächer aufweist, in welche die Gareinheiten einsetzbar oder eingesetzt sind. Die Gareinheiten können Auflageflansche aufweisen, mit welchen sie in die Fächer des Gehäuses einsetzbar sind. Im Gehäuse können ein oder mehrere (die Fächer festlegende) Schlitze vorgesehen sein, um die Auflageflansche der Gareinheiten aufzunehmen. Es kann auch ein einziger Auflageflansch pro Gareinheit vorgesehen sein, z. B. in Form eines umlaufenden Randes bzw. einer umlaufenden Lasche. Die Lasche kann sich an eine Gareinheit-Außenwand anschließen, die eine zwischen Begrenzungssteg und der besagten Gareinheiten-Außenwand vorliegende Ringnut begrenzt.

Nach einer weiteren Ausgestaltung der Erfindung kann vorgesehen sein, dass die Fächer Schubladenfächer sind, in welche die Gareinheiten nach Art einer Schublade ein- und ausschiebbar sind. Dies ermöglicht eine besonders einfache Assemblierung der Gareinheiten zu einer Gar-Baugruppe.

Nach einer weiteren Ausgestaltung der Erfindung kann vorgesehen sein, dass das Gehäuse an seinem oberen Ende einen Deckel aufweist oder mit einem Deckel verbindbar ist, wobei mit dem Deckel der Topf oder das Gefäß abdeckbar ist. Nach einer weiteren Ausgestaltung der Erfindung kann vorgesehen sein, dass das Gehäuse und der Deckel eine gemeinsame Baueinheit ausbilden. Dies ermöglicht eine besonders einfache Positionierung bzw. Handhabung der Gar-Baugruppe.

Nach einer weiteren Ausgestaltung der Erfindung kann vorgesehen sein, dass im Falle von in das Gehäuse eingesetzten und übereinander angeordneten Gareinheiten zwischen dem Begrenzungssteg und einer Gehäusewand eine oder mehrere Durchtrittsöffnung(en) in den jeweiligen Gareinheiten ausgebildet ist/sind oder ein Spalt zwischen den jeweiligen Gareinheiten und der Gehäusewand vorgesehen ist, durch welche Wärmeträgermedium hindurchströmen kann.

Nach einer weiteren Ausgestaltung der Erfindung kann vorgesehen sein, dass der Speisenaufnahmeabschnitt von einem Gareinheit-Deckel zumindest teilweise abdeckbar ist. Der Gareinheit-Deckel kann eine Deckel-Öffnung zum Austreten von Wärmeträgermedium aufweisen. Auch können mehrere in dem Gareinheit-Deckel angeordnete Deckel-Öffnungen vorgesehen sein.

Die Deckel-Öffnungen können regelmäßig oder unregelmäßig in dem Gareinheit-Deckel verteilt ausgebildet sein. Die Deckel-Öffnungen können eine beliebige Form ausbilden. Insbesondere können die Deckel-Öffnungen kreisförmig oder nach Art eines Langlochs ausgebildet sein.

Der Gareinheit-Deckel kann den Speisenaufnahmeabschnitt insbesondere auf dem Ring aufliegend abdecken. Der Gareinheit-Deckel kann zudem an einer dem Speisenaufnahmeabschnitt gegenüberliegenden Deckel-Oberseite einen, insbesondere zentral angeordneten, Deckel-Griff aufweisen.

Wie erwähnt betrifft die vorliegende Erfindung auch eine Küchenmaschine mit einem Topf und einer nach der Erfindung ausgebildeten Gar-Baugruppe.

In den Zeichnungen zeigen:
- Fig. 1: eine Vorderansicht eines Topfes einer Küchenmaschine mit einer darauf aufgesetzten Gar-Baugruppe nach einem ersten Ausführungsbeispiel der Erfindung;
- Fig. 2: eine Seiten-Schnittansicht des Topfes aus Fig. 1 mit darauf aufgesetzter Gar-Baugruppe;
- Fig. 3: eine Detaildarstellung der Einzelheit D aus Fig. 2;
- Fig. 4: eine Seiten-Schnittansicht einer Gareinheit gemäß dem ersten Ausführungsbeispiel der Gar-Baugruppe;
- Fig. 5: eine Detaildarstellung der Einzelheit C aus Fig. 4;
- Fig. 6: eine Aufsicht auf die Gareinheit aus Fig. 4;
- Fig. 7: eine perspektivische Darstellung eines zweiten Ausführungsbeispiels einer Gar-Baugruppe nach der Erfindung;
- Fig. 8: eine Seitendarstellung der Gar-Baugruppe aus Fig. 7;
- Fig. 9: eine Seiten-Schnittansicht der Gar-Baugruppe aus Fig. 7 in einer in ein Gefäß eingesetzten Stellung;
- Fig. 10: eine Detaildarstellung der Einzelheit B aus Fig. 9;
- Fig. 11: eine Perspektivdarstellung einer Gareinheit gemäß dem zweiten Ausführungsbeispiel der Gar-Baugruppe;
- Fig. 12: eine Aufsicht auf die Gareinheit aus Fig. 11;
- Fig. 13: eine Seiten-Schnittansicht einer Gar-Baugruppe gemäß einem dritten Ausführungsbeispiel der Erfindung in einer in ein Gefäß eingesetzten Stellung;
- Fig. 14: eine Detaildarstellung der Einzelheit B aus Fig. 13;
- Fig. 15: eine Perspektivdarstellung einer Gareinheit gemäß dem dritten Ausführungsbeispiel der Gar-Baugruppe;
- Fig. 16: eine Aufsicht auf die Gareinheit aus Fig. 15;
- Fig. 17: eine Perspektivdarstellung einer Gareinheit gemäß eines vierten Ausführungsbeispiels einer Gar-Baugruppe nach der Erfindung;
- Fig. 18: eine Perspektivdarstellung eines Rings gemäß des vierten Ausführungsbeispiels der Gar-Baugruppe aus Figur 17;
- Fig. 19: eine Perspektivdarstellung eines Gareinheit-Deckels nach der Erfindung.

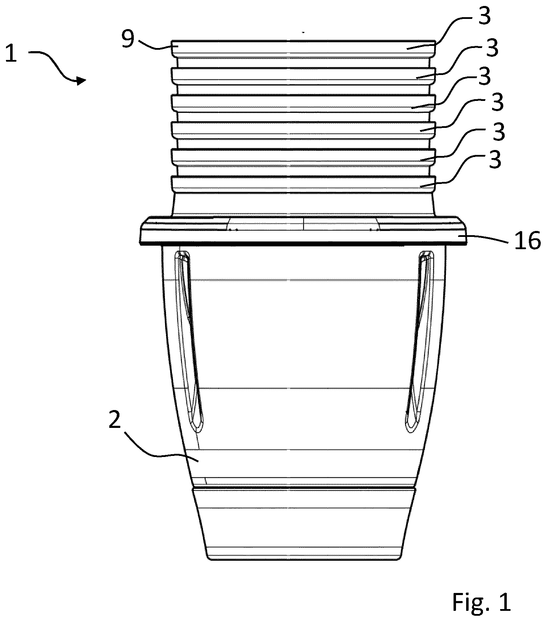

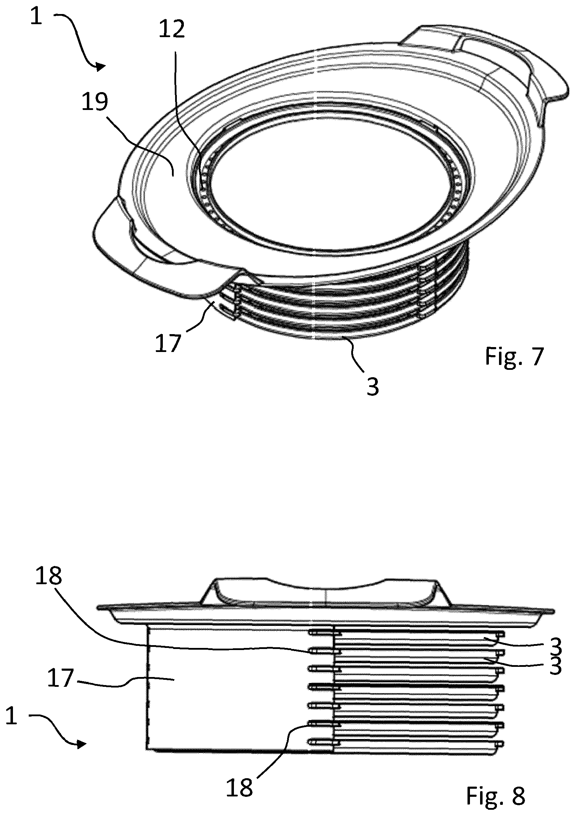

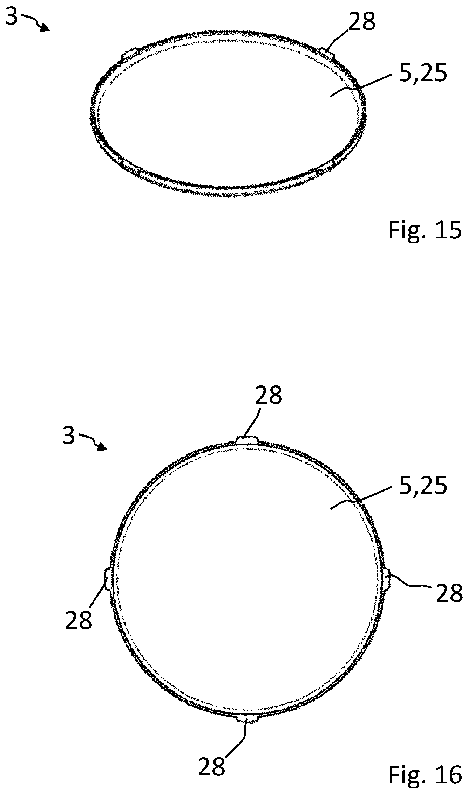

In den Figuren ist im Allgemeinen eine Gar-Baugruppe 1 für eine einen Topf 2 aufweisende Küchenmaschine gezeigt. Die Gar-Baugruppe 1 weist mehrere übereinander anordenbare oder angeordnete Gareinheiten 3 auf. Figuren 1 bis 6 zeigen eine Gar-Baugruppe 1 die auf den Topf 2 einer Küchenmaschine aufsetzbar ist, nämlich auf einen eine Topföffnung 15 des Topfes 2 abdeckenden Topfdeckel 16. Die Figuren 7 bis 16 betreffen eine Gar-Baugruppe 1, die in ein auf dem Topf 2 angeordnetes oder anordenbares Gefäß 4, insbesondere ein Dampfgargefäß, einsetzbar oder eingesetzt ist.

Die Gar-Baugruppe 1 ist dahingehend ausgebildet, dass aus dem Topf 2 aufsteigendes Wärmeträgermedium, insbesondere Wasserdampf, Wärmeenergie an die Gareinheiten 3 überträgt, sodass in den Gareinheiten 3 aufgenommene Speisen gegart werden können.

Die Gareinheiten 3 weisen jeweils einen Speisenaufnahmeabschnitt 5 zur Aufnahme der Speise und einen außerhalb des Speisenaufnahmeabschnitts 5 angeordneten Strömungsabschnitt 6 auf, wobei die jeweiligen Strömungsabschnitte 6 der Gareinheiten 3 - bei Anordnung der Gareinheiten 3 übereinander - gemeinsam einen, insbesondere vertikalen, Strömungsweg für aufsteigendes Wärmeträgermedium ausbilden.

Wie erwähnt betrifft das Ausführungsbeispiel nach Fig. 1 bis 6 eine Variante der Gar-Baugruppe 1, die auf den Topf 2 einer Küchenmaschine aufsetzbar ist. Wie in den Figuren 1 bis 6 gezeigt sind die Gareinheiten 3 der Gar-Baugruppe 1 bei diesem Ausführungsbeispiel übereinander stapelbar ausgebildet. Der Stapel von Gareinheiten 3 bildet die Gar-Baugruppe 1 aus.

Figur 1 zeigt eine Darstellung, bei der die Gar-Baugruppe 1 (also der Stapel aus Gareinheiten 3) auf den Topfdeckel 16 des Topfes 2 aufgesetzt ist.

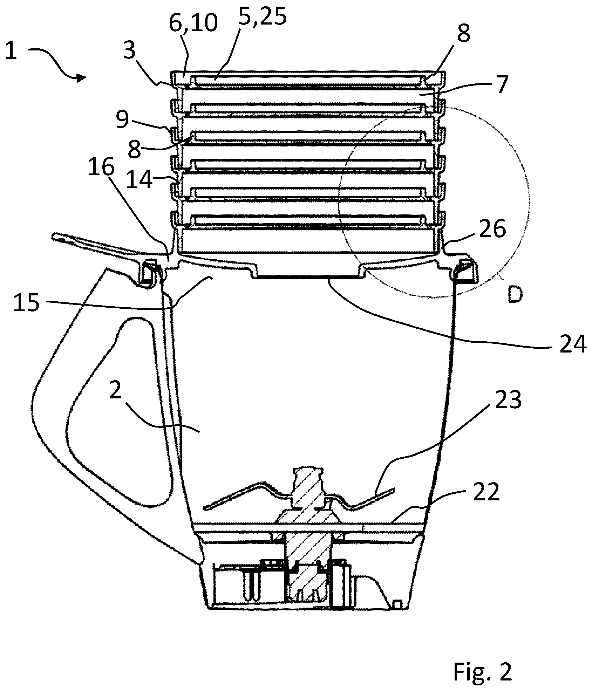

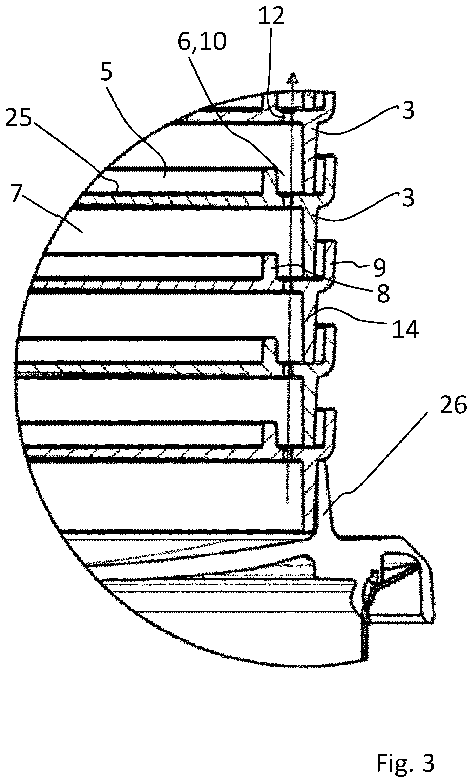

Wie in Figur 2 gezeigt, befindet sich im Bereich des Topfbodens 22 ein sogenanntes Mixmesser 23. Das Mixmesser 23 ist dazu ausgebildet, eine Rotationsbewegung auszuführen und damit ein in dem Topf 2 befindliches Lebensmittel oder eine Speise zu rühren, zu zerkleinern oder anderweitig zu bearbeiten. Der Topfdeckel 16 weist in seiner Mitte eine Zuführöffnung 24 auf, durch welche Zutaten von außen in den Topf 2 gegeben werden können. Zudem ermöglicht die Zuführöffnung 24, dass Stoffe aus dem Topf 2 nach außen treten können. Befindet sich in dem Topf 2 beispielsweise Wasser, so kann dieses bei Erhitzen in Wasserdampf umgewandelt werden, welcher nach oben aufsteigen und aus der Zuführöffnung 24 austreten kann. Bei Wasserdampf kann es sich um ein Wärmeträgermedium handeln. Die in Figur 2 mit dem Bezugszeichen D bezeichnete Einzelheit ist im Detail in Figur 3 wiedergegeben.

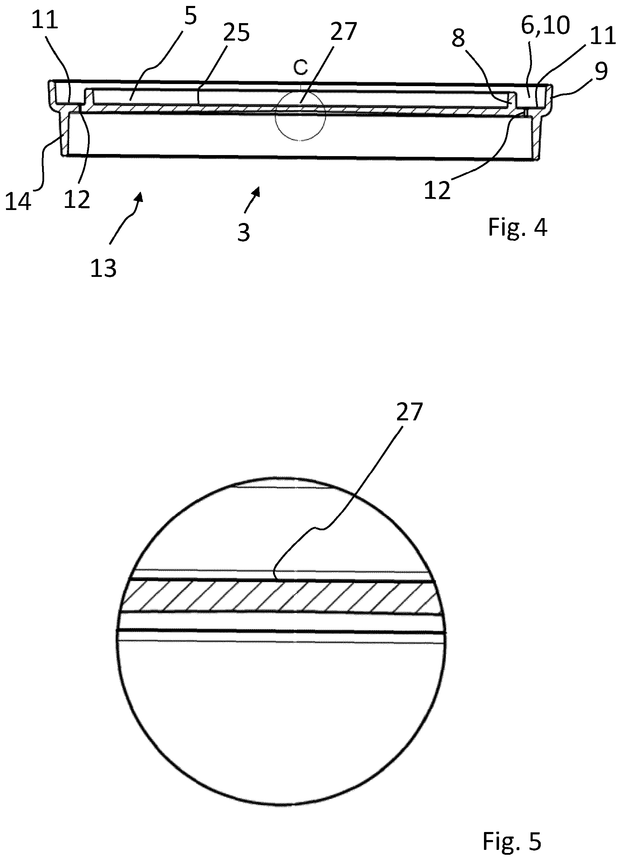

Figur 4 gibt zu erkennen, dass eine jeweilige Gareinheit 3 - wie erwähnt - einen Speisenaufnahmeabschnitt 5 zur Aufnahme einer Speise aufweist. Der Speisenaufnahmeabschnitt 5 weist eine Garfläche 25 auf, die von einem Begrenzungssteg 8 umgeben ist. Die Garfläche 25 kann plan oder eben sein, jedoch auch wannenartig oder pfannenartig ausgebildet sein. Der Begrenzungssteg 8 verhindert ein Zerlaufen bzw. Austreten der Speise aus dem Speisenaufnahmeabschnitt 5. In Aufsicht kann die Garfläche 25 zum Beispiel eine Kreisform, Ovalform oder eine polygonale Form aufweisen. Der Begrenzungssteg 8 läuft vollumfänglich um die Garfläche 25 herum. Außerhalb des Speisenaufnahmeabschnitts 5 ist ein Strömungsabschnitt 6 vorgesehen. Figur 4 zeigt, dass zwischen Begrenzungssteg 8 und einer Gareinheit-Außenwand 9 eine umlaufende Ringnut 10 ausgebildet ist. Die Ringnut 10 weist einen Ringnutboden 11 auf, der mit Durchtrittsöffnungen 12 versehen ist, durch die das Wärmeträgermedium hindurchströmen kann.

Das Wärmeträgermedium in Form von Wasserdampf steigt aus dem Topf 2 auf, tritt durch die Zuführöffnung 24 hindurch und strömt durch die Durchtrittsöffnungen 12 entlang eines vertikalen Strömungsweges nach oben. Diese Vertikalströmung ist in Fig. 3 mit einem Pfeil gekennzeichnet. Die Strömungsabschnitte 6 bzw. Durchtrittsöffnungen 12 ermöglichen somit ein Strömen des Wärmeträgermediums durch die Gar-Baugruppe 1. Zwischen übereinander gestapelten Gareinheiten 3 liegen Zwischenräume 7 vor. Das aufsteigende Wärmeträgermedium kann aus dem vertikalen Strömungsweg in die Zwischenräume 7 eintreten. Somit können in dem Speisenaufnahmeabschnitt 5 befindliche Speisen von im Zwischenraum 7 befindlichen Wärmeträgermedium unmittelbar oder durch Erwärmen der Speisenaufnahmeabschnitte 5 (von unten durch Entlangströmen des Wärmeträgermediums) mittelbar gegart werden.

Die Gareinheiten 3 weisen wie in Figur 2 und 3 gezeigt auf ihrer Unterseite 13 einen Standfuß 14 auf, nämlich in Form eines nach unten ragenden umlaufenden Kragens, mit dem eine jeweilige Gareinheit 3 auf einer darunterliegenden Gareinheit 3 platzierbar ist. Dabei wird ein Standfuß 14 einer Gareinheit 3 jeweils in der erwähnten Ringnut 10 einer darunter angeordneten Gareinheit 3 platziert. Die unterste Gareinheit 3 des Gareinheiten-Stapels ist mit dem Standfuß 14 auf dem Topfdeckel 16 platziert. Dieser Standfuß 14 stützt sich an einem umlaufenden Kragen 26 des Topfdeckels 16 ab bzw. liegt daran an. Es kann vorgesehen sein, eine oberste Gareinheit 3 mit einem Gar-Baugruppen-Deckel abzudecken. Der Gar-Baugruppen-Deckel kann Öffnungen zum Austreten von Wärmeträgermedium aufweisen.

Figur 4 zeigt eine einzelne Gareinheit 3 gemäß dem ersten Ausführungsbeispiel in einer Seiten-Schnittansicht. Die darin markierte Einzelheit C ist in Fig. 5 im Detail wiedergegeben. Erkennbar ist die Unterseite 13 der Garfläche 25 bzw. des Speisenaufnahmeabschnitts 5 radial in Richtung der Garflächen-Mitte 27 gekrümmt bzw. konkav ausgebildet. Diese Ausgestaltung kann auch als dachförmig bezeichnet werden. Dies kann vorteilhaft sein, um an der Unterseite 13 der Garfläche 25 kondensierendes Wärmeträgermedium radial nach außen abzuführen.

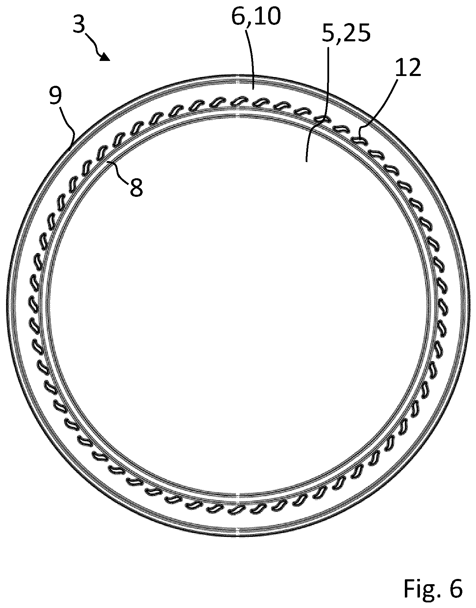

Figur 6 zeigt eine Aufsichtsdarstellung auf die Gareinheit 3 nach Fig. 4, wobei die im Strömungsabschnitt 6 bzw. im Ringnutboden 11 ausgebildeten Durchtrittsöffnungen 12 gut zu erkennen sind. Die Durchtrittsöffnungen 12 sind über die gesamte Ringnut 10 verteilt. Die Durchtrittsöffnungen 12 sind Lochöffnungen.

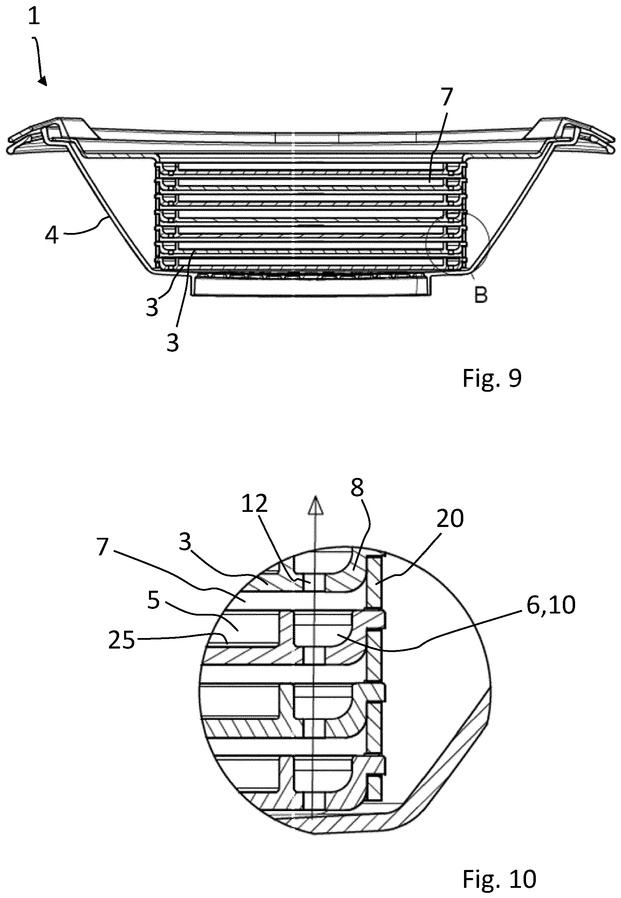

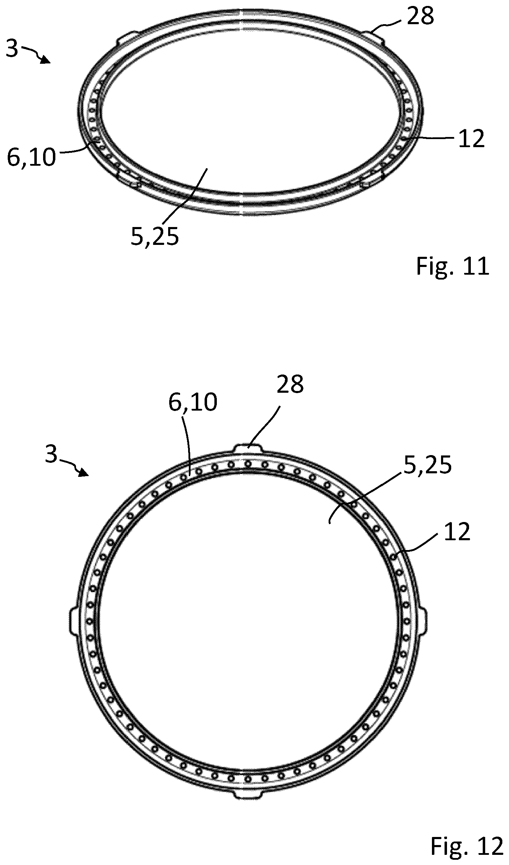

Ein zweites Ausführungsbeispiel einer Gar-Baugruppe 1 ist in den Figuren 7 bis 12 dargestellt. Die Gar-Baugruppe 1 ist in ein auf dem Topf 2 angeordnetes Gefäß 4 einsetzbar (Fig. 9). Die Gar-Baugruppe 1 weist ein Gehäuse 17 auf, in welches die Gareinheiten 3 derart einsetzbar oder eingesetzt sind, dass die Gareinheiten 3 übereinander angeordnet sind. Das Gehäuse 17 weist Fächer 18 auf, in welche die Gareinheiten 3 eingesetzt sind. Wie in Fig. 11 und 12 gezeigt, weisen die Gareinheiten 3 Auflageflansche 28 auf, mit welchen sie in die Fächer 18 des Gehäuses 17 einsetzbar sind. Im Gehäuse 17 können ein oder mehrere (die Fächer 18 festlegende) Schlitze vorgesehen sein, um die Auflageflansche 28 der Gareinheiten 3 aufzunehmen. Es kann auch ein einziger Auflageflansch 28 pro Gareinheit 3 vorgesehen sein, z. B. in Form eines umlaufenden Randes bzw. einer umlaufenden Lasche. Die Lasche kann sich an eine Gareinheit-Außenwand 9 anschließen, die ähnlich dem ersten Ausführungsbeispiel eine zwischen Begrenzungssteg 8 und der besagten Gareinheiten-Außenwand 9 vorliegende Ringnut 10 begrenzt.

Das Gehäuse 17 weist wie in Fig. 7 und 8 dargestellt an seinem oberen Ende einen Deckel 19 auf oder ist mit einem Deckel 19 verbindbar, wobei mit dem Deckel 19 das Gefäß 4 abdeckbar ist (vgl. Fig. 9). Die Gar-Baugruppe 1 kann somit samt Deckel 19 aus dem Gefäß 4 entnommen bzw. darin platziert werden, was die Handhabbarkeit deutlich vereinfacht.

Figur 11 und 12 zeigen Darstellungen der im zweiten Ausführungsbeispiel verwendeten Gareinheit 3, wobei die im Strömungsabschnitt 6 bzw. im Ringnutboden 11 ausgebildeten Durchtrittsöffnungen 12 gut zu erkennen sind. Die Durchtrittsöffnungen 12 sind über die gesamte Ringnut 10 verteilt. Die Durchtrittsöffnungen 12 sind Lochöffnungen.

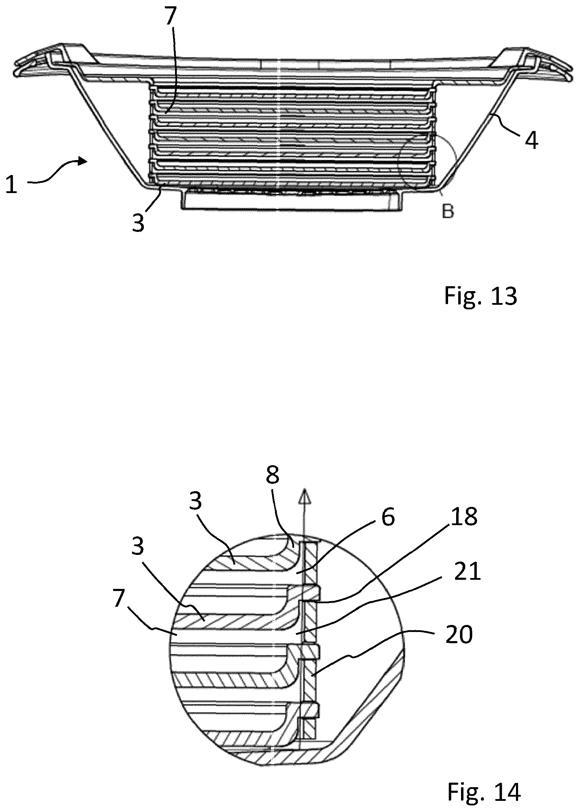

Im Gegensatz zu dem zweiten Ausführungsbeispiel greift die Lösung gemäß dem dritten Ausführungsbeispiel (Fig. 13 bis 16) nicht auf einen in Form einer Ringnut 10 mit Durchtrittsöffnungen 12 ausgebildeten Strömungsabschnitt 6 zurück, vielmehr kann das Wärmeträgermedium durch einen Spalt 21 zwischen den jeweiligen Gareinheiten 3 und der Gehäusewand 20 hindurchströmen, vgl. Fig. 14.

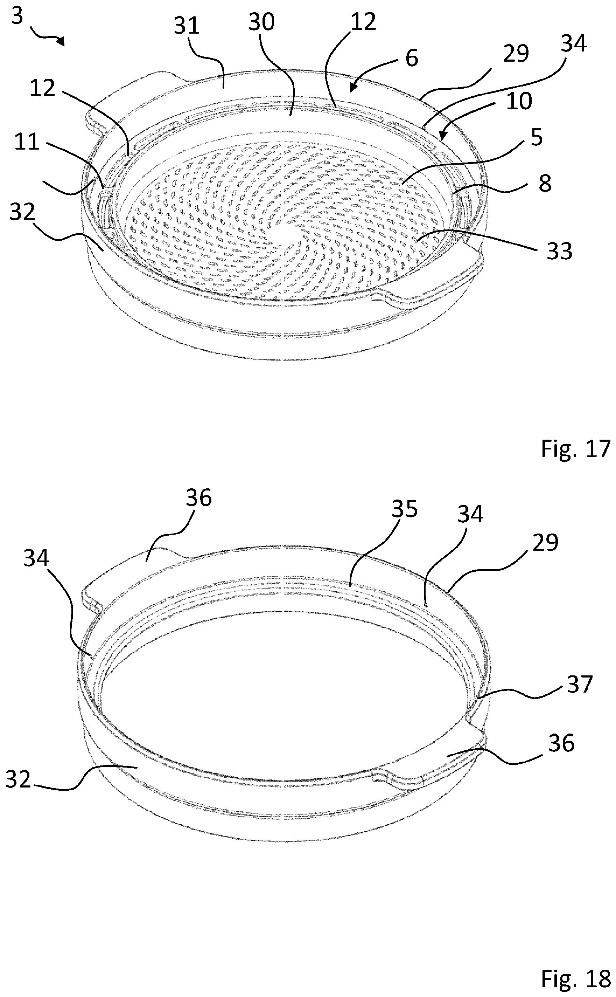

Figur 17 zeigt eine Gareinheit 3 nach einem vierten Ausführungsbeispiel der Gar-baugruppe 1 nach der Erfindung. Die Gareinheit 3 ist mehrteilig ausgebildet. Die Gareinheit 3 umfasst einen Ring 29 sowie einen Einsatz 30. Der Einsatz 30 ist in den Ring 29 eingesetzt. Der Ring 29 ist vorwiegend scheibenartig ausgebildet. Der Einsatz 30 weist einen Speisenaufnahmeabschnitt 5 sowie einen Strömungsabschnitt 6 auf. Der Speisenaufnahmeabschnitt 5 ist von einem Begrenzungssteg 8 umgeben. Von dem Begrenzungssteg 8 nach radial außen bildet der Einsatz 30 den Strömungsabschnitt 6 aus.

Der Ring 29 weist eine Ring-Innenseite 31 sowie eine Ring-Außenseite 32 auf. Der Einsatz 30 bildet zwischen dem Begrenzungssteg 8 und der Ring-Innenseite 31 eine umlaufende Ringnut 10 aus. Die Ringnut 10 weist ferner einen Ringnutboden 11 auf. In dem Ringnutboden 11 sind mehrere gleichmäßig in der Ringnut 10 verteilte Durchtrittsöffnungen 12 ausgebildet. Die Durchtrittsöffnungen 12 sind also segmentiert ausgebildet. Der Speisenaufnahmeabschnitt 5 ist perforiert ausgebildet. Der Speisenaufnahmeabschnitt 5 weist also mehrere Perforations-Öffnungen 33 auf. Die Perforations-Öffnungen 33 ermöglichen, dass ein Wärmeträgermedium nicht nur durch den Strömungsabschnitt 6, sondern auch durch die Perforations-Öffnungen 33 hindurchströmen kann.

Ferner zeigt Figur 17 zwei Rastnasen 34. Die Rastnasen 34 sind an den Einsatz 30 angrenzend an der Ring-Innenseite 31 angeordnet.

Figur 18 zeigt den Ring 29 aus Figur 17 ohne den in Figur 17 eingesetzten Einsatz 30. Figur 18 verdeutlicht die Anordnung der bereits in Figur 17 gezeigten Rastnasen 34. Außerdem ist gezeigt, dass der Ring 29 eine Ring-Auflage 35 aufweist. Die Ring-Auflage 35 ist an der Ring-Innenseite 31 umlaufend angeordnet. In Figur 17 liegt der Einsatz 30 mit einer (nicht gezeigten) Einsatz-Auflage an einer Unterseite des Einsatzes 30 auf der Ring-Auflage 35 auf.

Figur 18 verdeutlicht zudem, dass die Rastnasen 34 beabstandet zur Ring-Auflage 35 an der Ring-Innenseite 31 angeordnet sind. Der Einsatz 30 ist also (wie in Figur 17 gezeigt), sofern dieser in den Ring 29 eingesetzt ist, zwischen der Ring-Auflage 35 und den jeweiligen Rastnasen 34 angeordnet.

Der Ring 29 weist zudem zwei Griffe 36 auf. Die Griffe 36 sind gegenüberliegend voneinander an der Ring-Außenseite 32 sowie an einem oberen Ringende 37 angeordnet. Die Griffe 36 sind laschenartig ausgebildet und erstrecken sich von der Ring-Außenseite 32 weg.

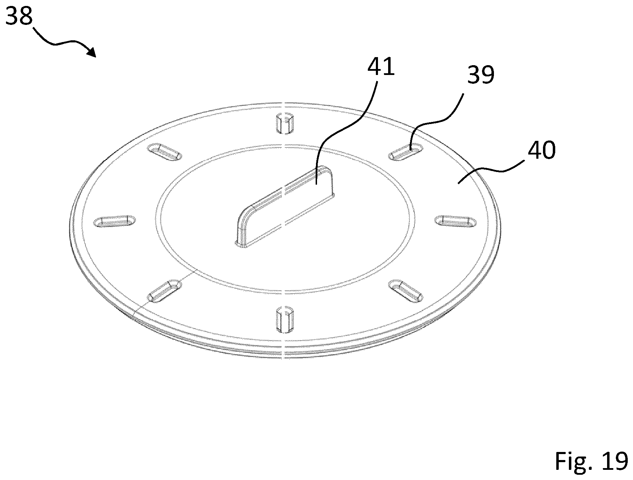

Figur 19 zeigt einen Gareinheit-Deckel 38. Der Gareinheit-Deckel 38 weist eine kreisrunde und an den Ring 29 aus Figur 17 und 18 angepasste Form auf. Der Gareinheit-Deckel 38 weist acht Deckel-Öffnungen 39 auf. Die Deckel-Öffnungen 39 sind jeweils in Form eines Langlochs ausgebildet. Die jeweiligen Langlöcher sind mit der Länge nach, nach radial außen ausgerichtet und regelmäßig in einem Kreis in dem Gareinheit-Deckel 38 angeordnet. Zentral auf einer Deckel-Oberseite 40 weist der Gareinheit-Deckel 38 einen Deckel-Griff 41 aus. Der Deckel-Griff 41 ist laschenartig ausgebildet und erstreckt sich von der Deckel-Oberseite 40 weg.

### Bezugszeichenliste

- 1: Gar-Baugruppe
- 2: Topf
- 3: Gareinheit
- 4: Gefäß
- 5: Speisenaufnahmeabschnitt
- 6: Strömungsabschnitt
- 7: Zwischenraum
- 8: Begrenzungssteg
- 9: Gareinheit-Außenwand
- 10: Ringnut
- 11: Ringnutboden
- 12: Durchtrittsöffnung
- 13: Unterseite
- 14: Standfuß
- 15: Topföffnung
- 16: Topfdeckel
- 17: Gehäuse
- 18: Fach
- 19: Deckel
- 20: Gehäusewand
- 21: Spalt
- 22: Topfboden
- 23: Mixmesser
- 24: Zuführöffnung
- 25: Garfläche
- 26: Kragen
- 27: Garflächen-Mitte
- 28: Auflageflansch
- 29: Ring
- 30: Einsatz
- 31: Ring-Innenseite
- 32: Ring-Außenseite
- 33: Perforations-Öffnungen
- 34: Rastnase
- 35: Ring-Auflage
- 36: Griff
- 37: Oberes Ringende
- 38: Gareinheit-Deckel
- 39: Deckel-Öffnung
- 40: Deckel-Oberseite
- 41: Deckel-Griff

## Patentansprüche

1. Gar-Baugruppe (1) für eine einen Topf (2) aufweisende Küchenmaschine, aufweisend mehrere übereinander anordenbare oder angeordnete Gareinheiten (3), wobei die Gar-Baugruppe (1) derart
a) auf den Topf (2) aufsetzbar ist, oder
b) in den Topf (2) oder ein auf dem Topf (2) angeordnetes Gefäß (4) einsetzbar ist,
dass ein aus dem Topf (2) aufsteigendes Wärmeträgermedium, insbesondere Wasserdampf, Wärmeenergie an die Gareinheiten (3) überträgt, sodass in den Gareinheiten (3) aufgenommene Speisen gegart werden können,
wobei die Gareinheiten (3) jeweils einen Speisenaufnahmeabschnitt (5) zur Aufnahme der Speise und einen außerhalb des Speisenaufnahmeabschnitts (5) angeordneten Strömungsabschnitt (6) aufweisen, wobei die jeweiligen Strömungsabschnitte (6) der Gareinheiten (3) - bei Anordnung der Gareinheiten (3) übereinander - gemeinsam einen, insbesondere vertikalen, Strömungsweg für aufsteigendes Wärmeträgermedium ausbilden, wobei die Gar-Baugruppe (1) ferner ein Gehäuse (17) aufweist, in welches die Gareinheiten (3) derart einsetzbar oder eingesetzt sind, dass die Gareinheiten (3) übereinander angeordnet sind, **dadurch gekennzeichnet, dass** das Gehäuse (17) Fächer (18) aufweist, in welche die Gareinheiten (3) einsetzbar oder eingesetzt sind.

2. Gar-Baugruppe (1) nach Anspruch 1, wobei bei Anordnung der Gareinheiten (3) übereinander der Strömungsweg mit zwischen den Gareinheiten (3) vorliegenden Zwischenräumen (7) strömungstechnisch verbunden ist.

3. Gar-Baugruppe (1) nach Anspruch 1 oder 2, wobei der Speisenaufnahmeabschnitt (5) von einem Begrenzungssteg (8) umgeben ist, der ein Herauslaufen der Speise aus dem Speisenaufnahmeabschnitt (5) beim Garen verhindert.

4. Gar-Baugruppe (1) nach einem der vorangehenden Ansprüche, wobei die Gareinheiten (3) übereinander stapelbar ausgebildet sind.

5. Gar-Baugruppe (1) nach Anspruch 3 und 4, wobei die Gareinheiten (3) jeweils zwischen Begrenzungssteg (8) und einer Gareinheit-Außenwand (9) eine umlaufende Ringnut (10) aufweisen, wobei in einem Ringnutboden (11) eine oder mehrere Durchtrittsöffnungen (12) für das Wärmeträgermedium ausgebildet sind.

6. Gar-Baugruppe (1) nach Anspruch 4 oder 5, wobei die Gareinheiten (3) jeweils auf ihrer Unterseite (13) einen Standfuß (14) aufweisen, vorzugsweise in Form eines nach unten ragenden, insbesondere umlaufenden, Kragens, mit dem eine jeweilige Gareinheit (3) auf einer darunterliegenden Gareinheit (3) platzierbar ist.

7. Gar-Baugruppe (1) nach Anspruch 6, wobei im Falle von mehreren übereinandergestapelten Gareinheiten (3)
- bei Aufsetzen der Gar-Baugruppe (1) auf den Topf (2), eine unterste Gareinheit (3) mit dem Standfuß (14) auf dem Topf (2), insbesondere auf einem eine Topföffnung (15) des Topfes (2) abdeckenden Topfdeckel (16), platziert ist,
- bei Einsetzen der Gar-Baugruppe (1) in den Topf (2), eine unterste Gareinheit (3) mit dem Standfuß (14) auf einer Topffläche, insbesondere einer Topfbodenfläche, platziert ist,
- bei Einsetzen der Gar-Baugruppe (1) in ein auf dem Topf (2) angeordnetes Gefäß (4), eine unterste Gareinheit (3) mit dem Standfuß (14) auf einer Gefäßfläche, insbesondere einer Gefäßbodenfläche, platziert ist.

8. Gar-Baugruppe (1) nach Anspruch 6 oder 7, wobei im Falle von mehreren übereinandergestapelten Gareinheiten (3), die jeweiligen Standfüße (14) der Gareinheiten (3) den Strömungsweg nach außen abgrenzen.

9. Gar-Baugruppe (1) nach Anspruch 1, wobei die Fächer (18) Schubladenfächer sind, in welche die Gareinheiten (3) nach Art einer Schublade ein- und ausschiebbar sind.

10. Gar-Baugruppe (1) nach einem der Ansprüche 1 oder 9, wobei das Gehäuse (17) an seinem oberen Ende einen Deckel (19) aufweist oder mit einem Deckel (19) verbindbar ist, wobei mit dem Deckel (19) der Topf (2) oder das Gefäß (4) abdeckbar ist.

11. Gar-Baugruppe (1) nach Anspruch 10, wobei das Gehäuse (17) und der Deckel (19) eine gemeinsame Baueinheit ausbilden.

12. Gar-Baugruppe (1) nach einem Ansprüche 1 bis 8, wobei der Speisenaufnahmeabschnitt (5) von einem Gareinheit-Deckel (38) zumindest teilweise abdeckbar ist.

13. Küchenmaschine mit einem Topf (2) und einer nach einem der Ansprüche 1 bis 12 ausgebildeten Gar-Baugruppe (1).

## Claims

1. A cooking assembly (1) for a food processor having a pot (2), wherein said cooking assembly comprises multiple cooking units (3) that are or can be arranged on top of one another, wherein the cooking assembly (1) can be
a) placed on the pot (2) or
b) inserted into the pot (2) or a vessel (4) arranged on the pot (2) in such a way that a heat transfer medium rising from the pot (2), particularly water vapor, transfers heat energy to the cooking units (3) such that meals received in the cooking units (3) can be cooked,
wherein the cooking units (3) respectively have a meal receiving section (5) for receiving the meal and a flow section (6) arranged outside the meal receiving section (5), wherein the respective flow sections (6) of the cooking units (3) jointly form - when the cooking units (3) are arranged on top of one another - a flow path, particularly a vertical flow path, for rising heat transfer medium, and wherein the cooking assembly (1) furthermore has a housing (17), into which the cooking units (3) are or can be inserted in such a way that the cooking units (3) are arranged on top of one another,
**characterized in that** the housing (17) has compartments (18), into which the cooking units (3) are or can be inserted.

2. The cooking assembly (1) according to claim 1, wherein the flow path is fluidically connected to intermediate spaces (7) formed between the cooking units (3) when the cooking units (3) are arranged on top of one another.

3. The cooking assembly (1) according to claim 1 or 2, wherein the meal receiving section (5) is surrounded by a boundary web (8) that prevents the meal from flowing out of the meal receiving section (5) during cooking.

4. The cooking assembly (1) according to one of the preceding claims, wherein the cooking units (3) are designed so as to be stackable on top of one another.

5. The cooking assembly (1) according to claim 3 and 4, wherein the cooking units (3) respectively have a circumferential annular groove (10) between the boundary web (8) and an outer wall (9) of the cooking unit, and wherein one or more passage openings (12) for the heat transfer medium are formed in a bottom (11) of the annular groove.

6. The cooking assembly (1) according to claim 4 or 5, wherein the cooking units (3) respectively have a pedestal (14) on their underside (13), preferably a pedestal in the form of a downwardly protruding and, in particular, circumferential collar, by means of which a respective cooking unit (3) can be placed on a subjacent cooking unit (3).

7. The cooking assembly (1) according to claim 6, wherein, in the case of multiple cooking units (3) that are stacked on top of one another,
- when placing the cooking assembly (1) on the pot (2), a bottom cooking unit (3) is placed on the pot (2), particularly on a pot lid (16) covering the pot opening (15) of the pot (2), with the pedestal (14),
- when inserting the cooking assembly (1) into the pot (2), a bottom cooking unit (3) is placed on a pot surface, particularly a bottom pot surface, with the pedestal (14),
- when inserting the cooking assembly (1) into a vessel (4) arranged on the pot (2), a bottom cooking unit (3) is placed on a vessel surface, particularly a bottom vessel surface, with the pedestal (14).

8. The cooking assembly (1) according to claim 6 or 7, wherein, in the case of multiple cooking units (3) that are stacked on top of one another, the respective pedestals (14) of the cooking units (3) delimit the flow path toward the outside.

9. The cooking assembly (1) according to claim 1, wherein the compartments (18) are drawer compartments that make it possible to insert and pull out the cooking units (3) like a drawer.

10. The cooking assembly (1) according to one of claims 1 or 9, wherein the housing (17) has a lid (19) or is connectable to a lid (19) on its upper end, and wherein the pot (2) or the vessel (4) can be covered with the lid (19).

11. The cooking assembly (1) according to claim 10, wherein the housing (17) and the lid (19) form a common unit.

12. The cooking assembly (1) according to one of claims 1 to 8, wherein the meal receiving section (5) can be at least partially covered with a cooking unit lid (38).

13. A food processor with a pot (2) and a cooking assembly (1) designed in accordance with one of claims 1 to 12.

## Revendications

1. Ensemble de cuisson (1), destiné à un robot ménager comportant une cuve (2) comportant plusieurs unités de cuisson (3) superposables ou superposées, l'ensemble de cuisson (1) étant
a) susceptible d'être posé sur la cuve (2) ou
b) étant susceptible d'être inséré dans la cuve (2) ou dans un récipient (4) disposé sur la cuve (2), de telle sorte
qu'un fluide caloporteur ascendant hors de la cuve (2), notamment de la vapeur d'eau, transmette de l'énergie thermique aux unités de cuisson (3), de sorte que des aliments réceptionnés dans les unités de cuisson (3) puissent être cuits,
les unités de cuisson (3) comportant chacune une partie réceptrice d'aliments (5), destinée à recevoir l'aliment et une partie d'écoulement (6), disposée à l'extérieur de la partie réceptrice d'aliments (5), (lorsque les unités de cuisson (3) sont disposées en superposition), les parties d'écoulement (6) respectives des unités de cuisson (3) constituant conjointement un trajet d'écoulement notamment vertical, pour un fluide caloporteur ascendant, l'ensemble de cuisson (1) comportant par ailleurs un corps (17), dans lequel les unités de cuisson (3) sont insérables ou insérées, de telle manière que les unités de cuisson (3) soient disposées en superposition, **caractérisé en ce que** le corps (17) comporte des compartiments (18) dans lesquels les unités de cuisson (3) sont insérables ou insérées.

2. Ensemble de cuisson (1) selon la revendication 1, lors d'une disposition en superposition des unités de cuisson (3), le trajet d'écoulement étant relié par technique d'écoulement avec des interstices (7) présents entre les unités de cuisson (3).

3. Ensemble de cuisson (1) selon la revendication 1 ou 2, la partie réceptrice d'aliments (5) étant entourée d'une nervure de délimitation (8), qui empêche un débordement de l'aliment hors de la partie réceptrice d'aliments (5), lors de la cuisson.

4. Ensemble de cuisson (1) selon l'une quelconque des revendications précédentes, les unités de cuisson (3) étant conçues en étant empilables en superposition.

5. Ensemble de cuisson (1) selon la revendication 3 et 4, les unités de cuisson (3) comportant chacune entre la nervure de délimitation (8) et une paroi extérieure (9) d'unité de cuisson une rainure annulaire (10) périphérique, dans un fond inférieur (11) de rainure annulaire étant conçus un ou plusieurs orifices de passage (12) pour le fluide caloporteur.

6. Ensemble de cuisson (1) selon la revendication 4 ou 5, les unités de cuisson (3) comportant chacune sur leur face inférieure (13) un pied (14), de préférence sous la forme d'un collerette saillant vers le bas, notamment périphérique, à l'aide de laquelle une unité de cuisson (3) respective peut se placer sur une unité de cuisson (3) sous-jacente.

7. Ensemble de cuisson (1) selon la revendication 6, dans le cas de plusieurs unités de cuisson (3) superposées,
- lors de la pose de l'ensemble de cuisson (1) sur la cuve (2), une unité de cuisson (3) la plus basse étant placée par le pied (14) sur la cuve (2), notamment sur un couvercle (16) de cuve recouvrant une ouverture (15) de cuve de la cuve (2),
- lors de l'insertion de l'ensemble de cuisson (1) dans la cuve (2), une unité de cuisson (3) la plus basse étant placée par le pied (14) sur une surface de cuve, notamment sur une surface de fond inférieur de cuve,
- lors de l'insertion de l'ensemble de cuisson (1) dans un récipient (4) disposé sur la cuve (2), une unité de cuisson (3) la plus basse étant placée par le pied (14) sur une surface de récipient, notamment sur une surface de fond inférieur de récipient.

8. Ensemble de cuisson (1) selon la revendication 6 ou 7, dans le cas de plusieurs unités de cuisson (3) empilées en superposition, les pieds (14) respectifs des unités de cuisson (3) délimitant vers l'extérieur le trajet d'écoulement.

9. Ensemble de cuisson (1) selon la revendication 1, les compartiments (18) étant des compartiments de tiroir, dans lesquels les unités de cuisson (3) sont insérables et extractibles à la manière d'un tiroir.

10. Ensemble de cuisson (1) selon l'une quelconque des revendications 1 ou 9, le corps (17) comportant sur son extrémité supérieure un couvercle (19) ou étant susceptible d'être assemblé avec un couvercle (19), la cuve (2) ou le récipient (4) pouvant être couvert(e) avec le couvercle (19).

11. Ensemble de cuisson (1) selon la revendication 10, le corps (17) et le couvercle (19) constituant un module commun.

12. Ensemble de cuisson (1) selon l'une quelconque des revendications 1 à 8, la partie réceptrice d'aliments (5) pouvant être recouverte au moins partiellement par un couvercle (38) d'unité de cuisson.

13. Robot ménager, doté d'une cuve (2) et d'un ensemble de cuisson (1) conçu selon l'une quelconque des revendications 1 à 12.
